# EUROPEAN PATENT APPLICATION

(11) **EP 4 773 286 A1**
(43) Date of publication of application: **08.07.2026**
(21) Application number: 24859747.8
(22) Date of filing: 27.08.2024
(51) Int. Cl.: H01M 10/0562, H01B 1/06, H01G 11/56, H01M 10/058

(54) **MODIFIER FOR SOLID ELECTROLYTES AND POWER STORAGE DEVICE**

(30) Priority: 29.08.2023 JP 2023139368
(71) Applicant: NOF Corporation, Shibuya-ku Tokyo 150-6019 (JP); Sophia School Corporation, Tokyo 102-8554 (JP)
(72) Inventor: SAWADA, Yoichiro, Tokyo 150-6019 (JP); FUJITA, Masahiro, Tokyo 102-8554 (JP)
(74) Representative: Weickmann & Weickmann PartmbB
(86) International application number: PCT/JP2024/030430
(87) International publication number: WO 2025/047715

(57) **Abstract**

The present invention provides a modifying material for solid electrolytes, containing an ionic compound composed of an anion containing fluorine or a cyano group and a pyrrolidinium cation, a borate having a polymerizable functional group, and a lithium salt.

## Description

### [Technical Field]

The present invention relates to a modifying material for solid electrolytes, and a power storage device using the material. As used herein, the "modifying material for solid electrolytes" refers to a material used to form a member present between a solid electrolyte and an electrode to reduce the interfacial resistance between them (e.g., a film present between a solid electrolyte and an electrode), or a member present between a solid electrolyte and a solid electrolyte to reduce the interfacial resistance between them.

### [Background Art]

The use of solid electrolyte as an electrolyte in power storage devices such as secondary battery, electric double layer capacitor, and the like has been considered. Known examples of solid electrolyte include sulfide solid electrolytes such as Li₂S·P₂S₅ and the like, oxide solid electrolyte such as Li₇La₃Zr₂O₁₂ and the like, plastic crystal solid electrolyte, and the like. Furthermore, known examples of plastic crystal include ionic compounds composed of N-ethyl-N-methylpyrrolidinium cation and bis(fluorosulfonyl)imide anion.

Plastic crystal solid electrolytes comprise a matrix of plastic crystals, which serve as the ion-conduction medium, doped with an electrolyte (e.g., lithium salt). Plastic crystals, also known as OIPCs, possess both ordered array and orientational disorder. That is, a "plastic crystal" refers to a crystal that maintains a regular three-dimensional crystal lattice structure of anions and cations, while these ions exhibit rotational irregularity.

In a plastic crystal solid electrolyte, anions and cations generated by dissociation of doped electrolyte are hopped by the rotation of the anions and cations in the plastic crystal, and move through voids in the crystal lattice. Such plastic crystal solid electrolyte is disclosed, for example, in Patent Literature 1.

### [Citation List]

### [Patent Literature]

[Patent Literature 1]
JP 2020-167025 A

### [Summary of Invention]

### [Technical Problem]

In power storage devices that use solid electrolytes (e.g., lithium ion secondary battery), the volume of the solid electrolyte expands during charging and contracts during discharging. A film that contacts such solid electrolyte is pressurized by the volumetric expansion of the solid electrolyte during charging, and the pressure is released by the volumetric contraction thereof during discharging. Therefore, such film is required to be superior in followability to volume changes of the solid electrolyte. In addition, such film is required to have high ionic conductance.

The present invention has been made taking note of the above-mentioned situation, and aims to provide a modifying material capable of forming a film that contacts a solid electrolyte, is superior in followability to volume changes of the solid electrolyte, and exhibits high ionic conductance.

### [Solution to Problem]

The present inventors have conducted intensive studies in an attempt to achieve the above-mentioned objects and found that a film that is superior in followability to volume changes of the solid electrolyte and exhibits high ionic conductance can be formed from a modifying material containing a specific ionic compound, a borate having a polymerizable functional group, and a lithium salt. The present invention based on this finding is as follows.
[1] A modifying material for solid electrolytes, comprising
   an ionic compound comprising an anion containing a fluorine atom or a cyano group and a pyrrolidinium cation,
   a borate having a polymerizable functional group, and
   a lithium salt.
[2] The modifying material of the aforementioned [1], wherein a content of the aforementioned ionic compound is 10 to 90% by mass, a content of the aforementioned borate having a polymerizable functional group is 1 to 20% by mass, and a content of the aforementioned lithium salt is 5 to 70% by mass, with respect to the total of the aforementioned ionic compound, the aforementioned borate having a polymerizable functional group, and the aforementioned lithium salt.
[3] The modifying material of the aforementioned [1] or [2], wherein the aforementioned borate having a polymerizable functional group is a borate represented by the formula (1): 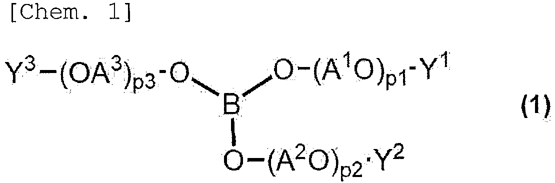 in the formula (1), Y¹ to Y³ are each independently an acryloyl group, a methacryloyl group, or an alkyl group having 1 to 4 carbon atoms, and at least one of these is an acryloyl group or a methacryloyl group,
   A¹O to A³O are each independently an oxyalkylene group having 2 to 4 carbon atoms, and
   p1 to p3 are each independently a numeral of 1 to 600.
[4] The modifying material of any one of the aforementioned [1] to [3], wherein the aforementioned pyrrolidinium cation is a cation represented by the formula (2): 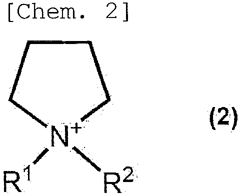 in the formula (2), R¹ and R² are each independently a methyl group, an ethyl group, a propyl group, an isopropyl group, a methoxymethyl group, or a methoxyethyl group.
[5] The modifying material of any one of the aforementioned [1] to [4], wherein the aforementioned anion containing a fluorine atom or a cyano group is
   an anion containing a fluorine atom and selected from the group consisting of
      an imide anion in which two hydrogen atoms of NH₂⁻ anion are each independently substituted by a perfluoroalkylsulfonyl group or a fluorosulfonyl group (when two hydrogen atoms of the aforementioned NH₂⁻ anion are each independently substituted by the aforementioned perfluoroalkylsulfonyl group, the two perfluoroalkyl groups contained therein are optionally connected),
      a tris(trifluoromethanesulfonyl)methanide anion,
      a hexafluorophosphate anion,
      a (perfluoroalkyl)fluorophosphate anion in which at least one but not all fluorine atoms of a hexafluorophosphate anion are substituted by perfluoroalkyl groups,
      a tetrafluoroborate anion,
      a (perfluoroalkyl)fluoroborate anion in which at least one but not all the fluorine atoms of a tetrafluoroborate anion are substituted by perfluoroalkyl groups, and
      an N-(perfluoroalkylsulfonyl)perfluorocarboxylic acid amide anion, or
   an anion containing a cyano group and selected from the group consisting of
      a tricyanomethanide anion,
      a tetracyanoborate anion,
      a tricyanomethoxyborate anion,
      a tricyanoisopropoxyborate anion,
      a tricyano(pentafluorophenoxy)borate anion,
      a tricyano(trimethylsiloxy)borate anion,
      a tricyano(hexafluoroisopropoxy)borate anion,
      a tricyanomethylthioborate anion,
      a dicyanodimethoxyborate anion, and
      a cyanotrimethoxy borate anion.
[6] The modifying material of the aforementioned [5], wherein the aforementioned imide anion is an anion selected from the group consisting of
   a bis(perfluoroalkylsulfonyl)imide anion, a bis(fluorosulfonyl)imide anion, and an N-(fluorosulfonyl)-N-(perfluoroalkylsulfonyl)imide anion, each of which is represented by the formula (A): 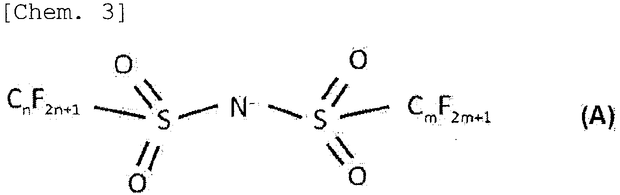
   in the formula (A), m and n are each independently an integer of 0 or more,
      a cyclohexafluoropropane-1,3-bis(sulfonyl)imide anion represented by the formula (B): 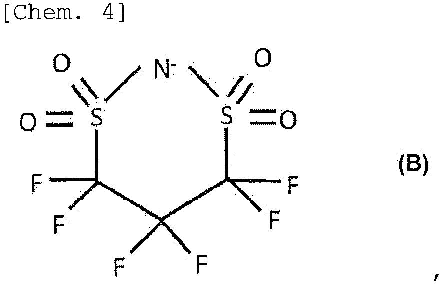 and
      a cyclotetrafluoroethane-1,3-bis(sulfonyl)imide anion represented by the formula (C): 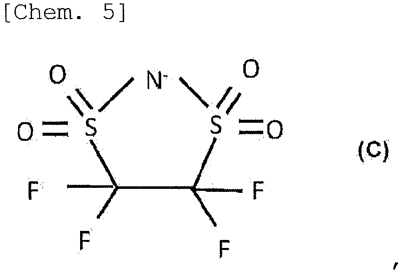
      the aforementioned (perfluoroalkyl)fluorophosphate anion is a tris(fluoroalkyl)trifluorophosphate anion represented by the formula (D): 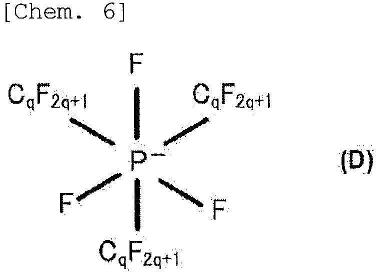
   in the formula (D), q is an integer of 1 or more,
      the aforementioned (perfluoroalkyl)fluoroborate anion is an anion selected from the group consisting of a mono(fluoroalkyl)trifluoroborate anion and a bis(fluoroalkyl)fluoroborate anion, each of which is represented by the formula (E): 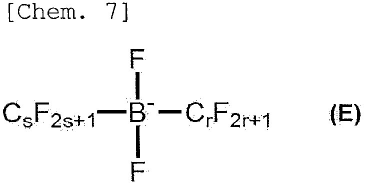
   in the formula (E), r is an integer of 1 or more and s an integer of 0 or more, and
      the N-(perfluoroalkylsulfonyl)perfluorocarboxylic acid amide anion is an anion represented by the formula (F): 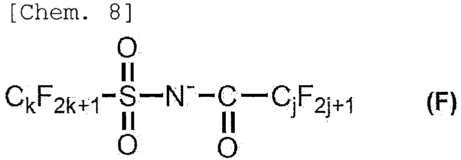
   in the formula (F), j and k are each independently an integer of 1 or more.
[7] The modifying material of any one of the aforementioned [1] to [6], further comprising a polymerization initiator.
[8] A power storage device provided with
   a film formed from the modifying material of any one of the aforementioned [1] to [7],
   a solid electrolyte, and
   two electrodes facing each other across the aforementioned solid electrolyte,
   wherein the aforementioned film is present between the aforementioned solid electrolyte and at least one of the aforementioned two electrodes.
[9] The power storage device of the aforementioned [8], wherein at least one of the aforementioned two electrodes is a polarizable electrode comprising an active material layer made of a porous material and a current collector.

### [Advantageous Effects of Invention]

The modifying material for solid electrolytes of the present invention can form a film that contacts a solid electrolyte, is superior in followability to volume changes of the solid electrolyte, and exhibits high ionic conductance.

### [Description of Embodiments]

Embodiments of the present invention are described below. However, the present invention is not limited to the following embodiments, and various modifications are possible, such as modification of modifying material compositions, modification of battery compositions, and the like). The present invention encompasses configurations that are substantially the same as the configurations of the following embodiments (e.g., configurations with the same function, method, and results, or configurations with the same purpose and effect). The present invention also encompasses configurations in which non-essential parts of the configurations of the following embodiments are replaced with other configurations. Furthermore, the present invention encompasses configurations that achieve the same action and effect as the configurations of the following embodiments. Furthermore, the present invention also encompasses configurations in which a known technique is added to the configurations of the following embodiments.

Respective descriptions in the present specification can be combined with each other, except where it is clear that they cannot be combined.

### <Modifying material for solid electrolyte>

The modifying material for solid electrolytes of the present invention (hereinafter sometimes to be abbreviated as "the modifying material of the present invention") contains
an ionic compound comprising an anion containing a fluorine atom or a cyano group and a pyrrolidinium cation (hereinafter sometimes to be abbreviated as "ionic compound"),
a borate having a polymerizable functional group, and
a lithium salt.

The modifying material of the present invention is preferably a coating material for solid electrolytes. Here, the "coating material for solid electrolytes" refers to a material used to form a film that coats part or all of the surface of a solid electrolyte.

Only one kind of each component in the modifying material of the present invention may be used or two or more kinds thereof may be used in combination. Each component is described in turn below.

### <Ionic compound>

The ionic compound used in the present invention is composed of an anion containing a fluorine atom or a cyano group and a pyrrolidinium cation. These are described in order below.

The anion containing a fluorine atom or a cyano group is preferably
an anion containing a fluorine atom and selected from the group consisting of
   (i) imide anions in which two hydrogen atoms of NH₂⁻anion are each independently substituted by a perfluoroalkylsulfonyl group or a fluorosulfonyl group (when two hydrogen atoms of the aforementioned NH₂⁻ anion are each independently substituted by the aforementioned perfluoroalkylsulfonyl group, the two perfluoroalkyl groups contained therein are optionally connected),
   (ii) tris(trifluoromethanesulfonyl)methanide anions,
   (iii) hexafluorophosphate anions (PF₆⁻),
   (iv) (perfluoroalkyl)fluorophosphate anions in which at least one but not all fluorine atoms of a hexafluorophosphate anion are substituted by perfluoroalkyl groups,
   (v) tetrafluoroborate anions (BF₄⁻),
   (vi) (perfluoroalkyl)fluoroborate anions in which at least one but not all fluorine atoms of a tetrafluoroborate anion are substituted by perfluoroalkyl groups, and
   (vii) N-(perfluoroalkylsulfonyl)perfluorocarboxylic acid amide anions, or
an anion containing a cyano group and selected from the group consisting of
   (viii) tricyanomethanide anions,
   (ix) tetracyanoborate anions,
   (x) tricyanomethoxyborate anions,
   (xi) tricyanoisopropoxyborate anions,
   (xii) tricyano(pentafluorophenoxy)borate anions,
   (xiii) tricyano(trimethylsiloxy)borate anions,
   (xiv) tricyano(hexafluoroisopropoxy)borate anions,
   (xv) tricyanomethylthioborate anions,
   (xvi) dicyanodimethoxyborate anions, and
   (xvii) cyanotrimethoxy borate anions.

The anion containing a fluorine atom or a cyano group is more preferably an anion containing a fluorine atom and selected from the group consisting of the aforementioned (i) to (vii).

The imide anion of the aforementioned (i) is preferably an anion selected from the group consisting of bis(perfluoroalkylsulfonyl)imide anions (i.e., anions in which m and n in the formula (A) are each independently an integer of 1 or more), bis(fluorosulfonyl)imide anions (i.e., anions in which m and n in the formula (A) are both 0), and N-(fluorosulfonyl)-N-(perfluoroalkylsulfonyl)imide anions (i.e., anions in which m in the formula (A) is an integer of 1 or more, and n is 0), each of which is represented by the formula (A): 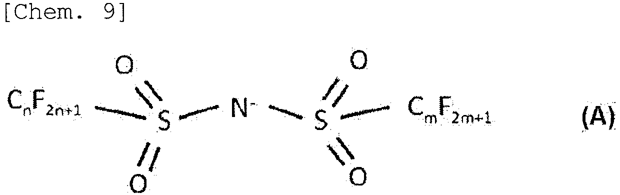 in the formula (A), m and n are each independently an integer of 0 or more,
cyclohexafluoropropane-1,3-bis(sulfonyl)imide anions represented by the formula (B): 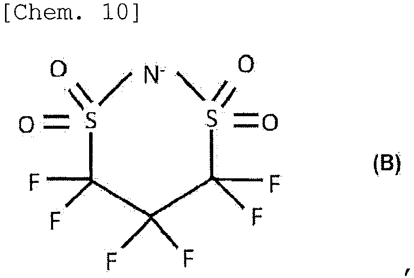 and
cyclotetrafluoroethane-1,3-bis(sulfonyl)imide anions represented by the formula (C):

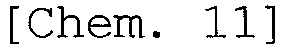

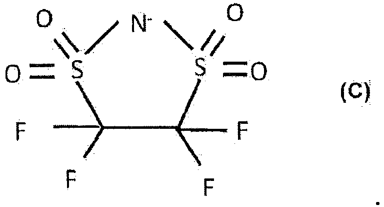

When n in the formula (A) is 0, it means that CₙF₂ₙ₊₁ in the formula (A) is F. When n is 1 or more, CₙF₂ₙ₊₁ is a perfluoroalkyl group. Symbols similar to "CₙF₂ₙ₊₁" have the same meaning as "CₙF₂ₙ₊₁". The perfluoroalkyl group may be linear or branched.

In the bis(perfluoroalkylsulfonyl)imide anion represented by the formula (A), m and n are preferably each independently an integer of 1 or more and 5 or less, more preferably each independently an integer of 1 or more and 3 or less.

In the N-(fluorosulfonyl)-N-(perfluoroalkylsulfonyl)imide anion represented by the formula (A), m is preferably an integer of 1 or more and 5 or less, more preferably an integer of 1 or more and 3 or less.

Examples of the bis(perfluoroalkylsulfonyl)imide anion include bis(trifluoromethanesulfonyl)imide anion (an anion in which m and n in the formula (A) are both 1) and bis(pentafluoroethylsulfonyl)imide anion (an anion in which m and n in the formula (A) are both 2).

The tris(trifluoromethanesulfonyl)methanide anion of the aforementioned (ii) is represented by the following formula (G).

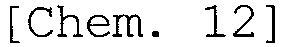

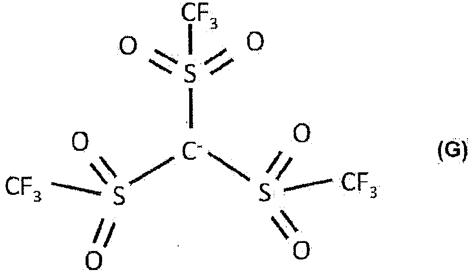

The (perfluoroalkyl)fluorophosphate anion of the aforementioned (iv) is preferably a tris(fluoroalkyl)trifluorophosphate anion represented by the formula (D): 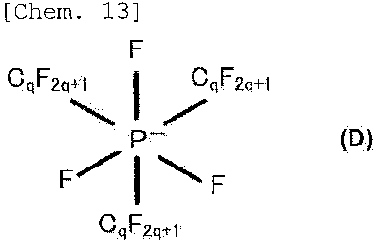 in the formula (D), q is an integer of 1 or more. In the formula (D), q is preferably an integer of 1 or more and 5 or below, more preferably an integer of 1 or more and 3 or below.

Examples of the tris(fluoroalkyl)trifluorophosphate anion include tris(pentafluoroethyl)trifluorophosphate anion (i.e., an anion in which q in the formula (D) is 2).

The (perfluoroalkyl)fluoroborate anion of the aforementioned (vi) is preferably an anion selected from the group consisting of mono(fluoroalkyl)trifluoroborate anions (i.e., anions in which r in the formula (E) is an integer of 1 or more, and s is 0), and bis(fluoroalkyl)fluoroborate anions (i.e., anions in which r and s in the formula (E) are each independently an integer of 1 or more), each of which is represented by the formula (E): 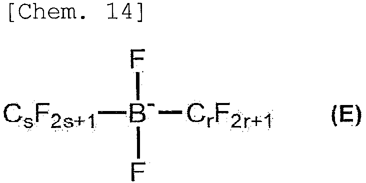 in the formula (E), r is an integer of 1 or more, and s is an integer of 0 or more.

In the formula (E), r is preferably an integer of 1 or more and 5 or less, more preferably an integer of 1 or more and 3 or less.

In the mono(fluoroalkyl)trifluoroborate anion represented by the formula (E), s is preferably an integer of 0 or more and 5 or less, more preferably an integer of 0 or more and 3 or less.

In the bis(fluoroalkyl)fluoroborate anion represented by the formula (E), s is preferably an integer of 1 or more and 5 or less, more preferably an integer of 1 or more and 3 or less.

The N-(perfluoroalkylsulfonyl)perfluorocarboxylic acid amide anion of the aforementioned (vii) is preferably an anion represented by the formula (F): 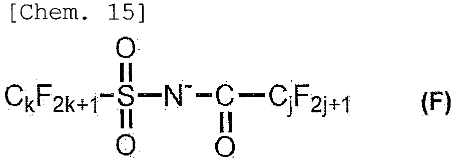 in the formula (F), j and k are each independently an integer of 1 or more.

In the formula (F), j and k are preferably each independently an integer of 1 or more and 5 or less, more preferably each independently an integer of 1 or more and 3 or less.

Examples of the N-(perfluoroalkylsulfonyl)perfluorocarboxylic acid amide anion include 2,2,2-trifluoro-N-(trifluoromethylsulfonyl)acetamide anion (i.e., an anion in which j and k in the formula (F) are both 1).

Among the aforementioned anions containing fluorine atoms,
the imide anion of the aforementioned (i) is preferred,
a bis(perfluoroalkylsulfonyl)imide anion in which m and n in the formula (A) are each independently an integer of 1 or more and 3 or less, a bis(fluorosulfonyl)imide anion in which m and n in the formula (A) are both 0, and an N-(fluorosulfonyl)-N-(perfluoroalkylsulfonyl)imide anion in which n in the formula (A) is 0 and m is an integer of 1 or more and 3 or less are more preferred, and
a bis(fluorosulfonyl)imide anion is further preferred, because they are widely used as electrolyte materials for battery device materials such as lithium salt and from the viewpoints of use history and easy availability.

The pyrrolidinium cation constituting the ionic compound is preferably a cation represented by the formula (2) 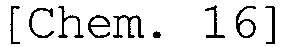 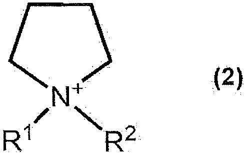 in the formula (2), R¹ and R² are each independently a methyl group, an ethyl group, a propyl group, an isopropyl group, a methoxymethyl group, or a methoxyethyl group.

Examples of the pyrrolidinium cation represented by the formula (2) include N-ethyl-N-methylpyrrolidinium cation (i.e., a cation in which R¹ in the formula (2) is a methyl group and R² is an ethyl group), N-isopropyl-N-methylpyrrolidinium cation (i.e., a cation in which R¹ in the formula (2) is a methyl group and R² is an isopropyl group), and N,N-diethylpyrrolidinium cation (i.e., a cation in which R¹ and R² in the formula (2) are both ethyl groups). Among these, N,N-ethylpyrrolidinium cation is preferred from the viewpoint of the conductivity of lithium ion.

From the viewpoint of ionic conductivity, the content of the ionic compound in the modifying material of the present invention is preferably 10 to 90% by mass, more preferably 20 to 80% by mass, further preferably 50 to 75% by mass, with respect to the total of the ionic compound, borate having a polymerizable functional group, and lithium salt.

Ionic compounds can be produced by known methods (e.g., the method described in Patent Literature 1) using commercially available starting materials.

### <Borate having polymerizable functional group>

The polymerizable functional group possessed by the borates used in the present invention is preferably a functional group having an ethylenic carbon-carbon double bond, more preferably an acryloyl group or a methacryloyl group, and further preferably a methacryloyl group. The borates used in the present invention may have only one kind of polymerizable functional group, or may have two or more kinds of polymerizable functional groups.

The borate having a polymerizable functional group is preferably a borate represented by the formula (1): 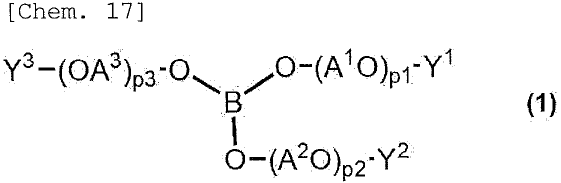 in the formula (1), Y¹ to Y³ are each independently an acryloyl group, a methacryloyl group, or an alkyl group having 1 to 4 carbon atoms, at least one of these is an acryloyl group or a methacryloyl group,
A¹O to A³O are each independently an oxyalkylene group having 2 to 4 carbon atoms, and
p1 to p3 are each independently a numeral of 1 to 600 (hereinafter sometimes to be abbreviated as "borate (1)").

Examples of the alkyl group having 1 to 4 carbon atoms include methyl group, ethyl group, propyl group, isopropyl group, butyl group, isobutyl group, sec-butyl group, tert-butyl group, and the like.

Y¹ to Y³ are preferably each independently an acryloyl group or a methacryloyl group, more preferably all methacryloyl groups, from the viewpoint of the thermal stability of the borate having a polymerizable functional group during processing into a power storage device and the like.

Examples of the oxyalkylene group having 2 to 4 carbon atoms include oxyethylene group, oxypropylene group, oxytrimethylene group, oxybutylene group, oxytetramethylene group, and the like. Among these, oxyethylene group and oxypropylene group are preferred, and oxyethylene group is more preferred, from the viewpoint of compatibility between the borate having a polymerizable functional group, and the ionic compound and lithium salt.

p1 to p3 respectively show the numbers of A¹O to A³O in the molecule. In other words, p1 to p3 are the average number of moles of alkylene oxide added per mole of the starting compound of borate (1). Since p1 to p3 are actually average numbers, they may be decimals. From the viewpoint of the ionic conductance of the film produced from the modifying material of the present invention, p1 to p3 are preferably each independently 1 to 80, more preferably each independently 1 to 50.

(A¹O)ₚ₁ to (A³O)ₚ₃ may each independently be formed only of one kind of oxyalkylene group having 2 to 4 carbon atoms, or may be formed of two or more kinds thereof. The polymerization type of (A¹O)ₚ₁ to (A³O)ₚ₃, which are formed of two or more kinds, may be random polymerization, block polymerization, alternating polymerization, or a combination of these.

(A¹O)ₚ₁ to (A³O)ₚ₃ may be the same or different, and are preferably the same in view of the ease of production of borate (1).

The borate having a polymerizable functional group (e.g., borate (1)) can be produced by a known method (e.g., the method described in JP 2004-2342 A).

The content of the borate having a polymerizable functional group in the modifying material of the present invention is preferably 1 to 20% by mass, more preferably 3 to 20% by mass, further preferably 5 to 15% by mass, with respect to the total of the ionic compound, borate having a polymerizable functional group, and lithium salt, from the viewpoint of the pressure shrinkage property of the film obtained from the modifying material of the present invention.

### <Lithium salt>

Examples of the lithium salt include Li(CF₃SO₂)₂N (abbreviation: LiTFSI), Li(FSO₂)₂N (abbreviation: LiFSI), Li(C₂F₅SO₂)₂N, LiPF₆, LiBF₄, LiAsF₆, LiTaF₆, LiClO₄, LiCF₃SO₃, and the like. The lithium salt is preferably lithium bis(fluorosulfonyl)imide (Li(FSO₂)₂N).

The content of lithium salt in the modifying material of the present invention is preferably 5 to 70% by mass, more preferably 8 to 60% by mass, further preferably 10 to 40% by mass, with respect to the total of the ionic compound, borate having a polymerizable functional group, and lithium salt, from the viewpoint of the compatibility between the lithium salt, and the borate having a polymerizable functional group and ionic compound.

### <Other component>

The modifying material of the present invention may contain other components different from the ionic compound, borate having a polymerizable functional group, or lithium salt, as long as the effects of the present invention are not impaired. Examples of other component include polymerization initiator, solvent, reactive diluent, and the like. Only one kind of any of other components may be used, or two or more kinds thereof may be used in combination.

The polymerization initiator is not particularly limited and known initiators can be used. Examples of the polymerization initiator include ammonium persulfate, benzoyl peroxide, azobisisobutyronitrile, 4,4'-azobis(4-cyanovaleric acid), dimethyl 2,2'-azobis(2-methylpropionate), 2,2'-azobis(N-butyl-2-methylpropionamide), 2,2'-azobis[N-(2-hydroxyethyl)-2-methylpropaneamide], 2,2'-azobis[N-(2-carboxyethyl)-2-methylpropionamidine], 2,2'-azobis[2-(2-imidazolin-2-yl)propane], 2,2-dimethoxy-1,2-diphenylethan-1-one, 1-hydroxycyclohexyl-phenyl-ketone, 2-hydroxy-2-methyl-1-phenyl-propan-1-one, 1-[4-(2-hydroxyethoxy)-phenyl]-2-hydroxy-2-methyl-1-propan-1-one, 2-hydroxy-1-{4-[4-(2-hydroxy-2-methyl-propionyl)-benzyl]phenyl}-2-methyl-propan-1-one, 2-methyl-1-(4-methylthiophenyl)-2-morpholinopropan-1-one, 2-(dimethylamino)-2-[(4-methylphenyl)methyl]-1-[4-(4-morpholinyl)phenyl]-1-butanone, 2,4,6-trimethylbenzoyl-diphenyl-phosphine oxide, methyl benzoylformate, diphenyl(2,4,6-trimethylbenzoyl)phosphine oxide, and derivatives thereof. The polymerization initiator may also be a mixture (e.g., mixture of benzoyl peroxide and a derivative thereof).

When a polymerization initiator is used, the content thereof in the modifying material of the present invention is preferably 0.0001 to 0.1 mol %, more preferably 0.0001 to 0.05 mol%, further preferably 0.0001 to 0.01 mol%, with respect to the borate having a polymerizable functional group, from the viewpoint of polymerization time. In the present specification, the "content (mol%) of B with respect to A" means "100 × amount of B (mol)/amount of A (mol)".

Examples of the solvent include hydrocarbons such as pentane and the like, ethers such as tetrahydrofuran and the like, esters such as ethyl formate and the like, ketones such as acetone and the like, alcohols such as methanol and the like, and nitriles such as acetonitrile and the like. Among these, nitrile is preferred.

The content of the solvent in the modifying material of the present invention is preferably 0 to 30% by mass, more preferably 0 to 25% by mass, further preferably 0 to 10% by mass, with respect to the total of the ionic compound, borate having a polymerizable functional group, and lithium salt, from the viewpoint of processability of the modifying material of the present invention. In the present specification, "content of B (% by mass) with respect to A" means "100 x amount of B (g)/amount of A (g)".

In the present invention, a reactive diluent may also be used. As used herein, the "reactive diluent" refers to a compound having a reactive functional group (e.g., a functional group having an ethylenic carbon-carbon double bond) which is liquid at room temperature. Examples of the reactive diluent include acrylonitrile, methacrylonitrile, and the like. Among these, acrylonitrile is preferred.

When a reactive diluent is used, the content thereof in the modifying material of the present invention is preferably 0.1 to 10% by mass, more preferably 0.1 to 8% by mass, further preferably 0.1 to 5% by mass, with respect to the total of the ionic compound, borate having a polymerizable functional group, and lithium salt, from the viewpoint of processability of the modifying material of the present invention.

### <Production method of modifying material>

The modifying material of the present invention can be produced by mixing an ionic compound, borate having a polymerizable functional group, and lithium salt, and other components (e.g., polymerization initiator, solvent, reactive diluent) where necessary. The mixing method is not particularly limited, and each component can be mixed using known equipment or apparatus.

### <Power storage device>

The present invention provides a power storage device provided with a film formed from the modifying material of the present invention (hereinafter sometimes to be abbreviated as "the film of the present invention"), a solid electrolyte, and two electrodes facing each other across the aforementioned solid electrolyte, wherein the aforementioned film is present between the aforementioned solid electrolyte and at least one of the aforementioned two electrodes. One film described above may be present between the aforementioned solid electrolyte and one of the aforementioned two electrodes, or one film each described above may be present between the aforementioned solid electrolyte and one of the aforementioned two electrodes and between the aforementioned solid electrolyte and the other of the aforementioned two electrodes (total of two films described above). The power storage device of the present invention is preferably a secondary battery, more preferably an all-solid-state secondary battery.

The film of the present invention can be produced, for example, by applying the modifying material of the present invention to a solid electrolyte and heating the same. Alternatively, the modifying material of the present invention may be applied to a support other than the solid electrolyte and heated to form the film of the present invention, and the solid electrolyte, the aforementioned film, and at least one of the aforementioned electrodes may be laminated.

The heating temperature in forming the film of the present invention is preferably 50 to 150°C, more preferably 50 to 90°C, and the heating time is preferably 0.5 to 3 hr, more preferably 0.5 to 1 hr.

The thickness of the film of the present invention is preferably 0.1 to 10 µm, more preferably 0.1 to 5 µm, from the viewpoint of solid electrolyte behavior required for a power storage device.

As the solid electrolyte, any of sulfide solid electrolyte, oxide solid electrolyte, and plastic crystal solid electrolyte can be used. Among these, sulfide solid electrolyte and oxide solid electrolyte are preferred.

Examples of the sulfide solid electrolyte include Li₂S-P₂S₅, Li₂S-P₂S₅-LiCl, Li₂S-P₂S₅-H₂S, Li₂S-P₂S₅-H₂S-LiCl, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SiS₂-LiCl, Li₂S-P₂S₅-SnS, Li₂S-P₂S₅-Al₂S₃, Li₂S-GeS₂, Li₂S-GeS₂-ZnS, Li₂S-Ga₂S₃, Li₂S-GeS₂-Ga₂S₃, Li₂S-GeS₂-P₂S₅, Li₂S-GeS₂-Sb₂S₅, Li₂S-GeS₂-Al₂S₃, Li₂S-SiS₂, Li₂S-Al₂S₃, Li₂S-SiS₂-Al₂S₃, Li₂S-SiS₂-P₂S₅, Li₂S-SiS₂-P₂S₅-LiI, Li₂S-SiS₂-LiI, Li₂S-SiS₂-Li₄SiO₄, Li₂S-SiS₂-Li₃PO₄, Li₁₀GeP₂S₁₂, Li₆PS₅Br, and the like. Among these, from the viewpoint of practical use in all-solid-state batteries, LGPS-type crystal Li₁₀GeP₂S₁₂ and argyrodite-type crystal Li₆PS₅Br are preferred, and Li₆PS₅Br is more preferred.

Examples of the oxide solid electrolyte include LiₓₐLa_{ya}TiO₃ (in the aforementioned formula, 0.3≤xa≤0.7, 0.3≤ya≤0.7) (LLT), Li_{xb}La_{yb}Zr_{zb}Mbb_{mb}O_{nb} (in the aforementioned formula, Mbb is at least one element selected from the group consisting of Al, Mg, Ca, Sr, V, Nb, Ta, Ti, Ge, In, and Sn, 5≤xb≤10, 1≤yb≤4, 1≤zb≤4, 0≤mb≤2, 5≤nb≤20), Li_{xc}B_{yc}Mcc_{zc}O_{nc} (in the aforementioned formula, Mcc is at least one element selected from the group consisting of C, S, Al, Si, Ga, Ge, In, and Sn, 0≤xc≤5, 0≤yc≤1, 0≤zc≤1, 0≤nc≤6), Li_{xd}(Al,Ga)_{yd}(Ti,Ge)_{zd}Si_{ad}P_{md}O_{nd} (in the aforementioned formula, (Al,Ga) is Al or Ga, (Ti,Ge) is Ti or Ge, 1≤xd≤3, 0≤yd≤1, 0≤zd≤2, 0≤ad≤1, 1≤md≤7, 3≤nd≤13), Li₍₃₋₂ₓₑ₎MeeₓₑDeeO (in the aforementioned formula, 0≤xe≤0.1, Mee is a divalent metal atom, Dee is a halogen atom or a combination of two or more halogen atoms), Li_{xf}Si_{yf}O_{zf} (in the aforementioned formula, 1≤xf≤5, 0<yf≤3, 1≤zf≤10), Li_{xg}S_{yg}O_{zg} (in the aforementioned formula, 1≤xg≤3, 0<yg≤2, 1≤zg≤10), Li₃BO₃-Li₂SO₄, Li₂O-B₂O₃-P₂O₅, Li₂O-SiO₂, Li₆BaLa₂Ta₂O₁₂, Li₃PO_{(4-3/2w)}N_{w} (in the aforementioned formula, w<1), Li_{3.5}Zn_{0.25}GeO₄ having LISICON (Lithium super ionic conductor)-type crystal structure, La_{0.55}Li_{0.35}TiO₃ having perovskite crystal structure, LiTi₂P₃O₁₂ having NASICON (Natrium super ionic conductor)-type crystal structure, Li_{1+xh+yh} (Al, Ga)ₓₕ(Ti, Ge)₂₋ₓₕSi_{yh}P_{3-yh}O₁₂ (in the aforementioned formula, (Al,Ga) is Al or Ga, (Ti,Ge) is Ti or Ge, 0≤xh≤1, 0≤yh≤1), Li₇La₃Zr₂O₁₂(LLZ) having garnet-type crystal structure, and the like. In addition, phosphorus compounds containing Li, P, and O are also desirable. Examples thereof include lithium phosphate (Li₃PO₄), LiPON in which at least one but not all oxygen atoms of lithium phosphate are substituted by nitrogens, LiPOD1 (in the aforementioned formula, D1 is at least one element selected from Ti, V, Cr, Mn, Fe, Co, Ni, Cu, Zr, Nb, Mo, Ru, Ag, Ta, W, Pt, and Au), and the like. In addition, LiA1ON (in the aforementioned formula, A1 is at least one kind selected from Si, B, Ge, Al, C, Ga, and the like) and the like can also be used preferably. Among these, from the viewpoint of practical use in all-solid-state batteries, La_{0.55}Li_{0.35}TiO₃ having perovskite crystal structure, LiTi₂P₃O₁₂ having NASICON-type crystal structure, Li_{1+xh+yn}(Al,Ga)ₓₕ(Ti,Ge)₂₋ₓₕSi_{yh}P_{3-yh}O₁₂ (in the aforementioned formula, (Al,Ga) is Al or Ga, (Ti,Ge) is Ti or Ge, 0≤xh≤1, 0≤yh≤1), and Li₇La₃Zr₂O₁₂ (LLZ) having garnet-type crystal structure are preferred, and Li_{1+xh+yh}(Al, Ga)ₓₕ(Ti, Ge)₂₋ₓₕSi_{yh}P_{3-yh}O₁₂ (in the aforementioned formula, (Al,Ga) is Al or Ga, (Ti,Ge) is Ti or Ge, 0≤xh≤1, 0≤yh≤1) (e.g., Li_{1.4}Al_{0.4}Ti_{1.6}(PO₄)₃) is more preferred.

As the plastic crystal solid electrolyte, those described in Patent Literature 1 can be used.

A separator may be placed between the positive electrode and the negative electrode to prevent contact between positive and negative electrodes and to maintain the shape of the solid electrolyte. However, when the solid electrolyte has a thickness that can prevent contact between the positive electrode and the negative electrode and has hardness capable of maintaining the shape by itself, a separator may not be used.

The positive electrode and negative electrode of an electric double layer capacitor, which is one type of power storage device, are constructed by forming an active material layer on a current collector. As the current collector, aluminum foil, platinum, gold, nickel, titanium, steel, carbon, and the like can be used. The shape of the current collector may be any, such as film, foil, plate, network, expanded metal, cylinder, and the like. The surface of the current collector may be a concave-convex surface formed by etching treatment and the like, or may be a plain surface. Furthermore, a surface treatment may be performed to attach phosphorus on the surface of the current collector.

At least one of the aforementioned two electrodes is preferably a polarizable electrode having an active material layer made of a porous material and a current collector. Examples of the aforementioned porous material include carbon materials with porous structures. The other of the positive and negative electrodes may have an active material layer containing metal compound particles and carbon materials that cause a Faraday reaction.

The carbon material in the polarizable electrode is, for example, mixed with a conductive auxiliary and a binder and applied to the current collector by a doctor blade method or the like. The mixture of the carbon material, conductive auxiliary, and binder may be formed into a sheet and then pressed onto the current collector. Here, the pores in the porous structure are formed by gaps between primary particles and between secondary particles when the carbon material is particulate, or by gaps between fibers when the carbon material is fibrous.

Examples of carbon materials for the active material layer in the polarizable electrode include natural plant tissues such as coconut husk and the like, synthetic resins such as phenol and the like, activated carbon derived from fossil fuels such as coal, coke, pitch, and the like as a raw material, carbon blacks such as Ketjen black, acetylene black, channel black, and the like, carbon nanohorn, amorphous carbon, natural graphite, artificial graphite, graphitized ketjen black, mesoporous carbon, carbon nanotube, carbon nanofiber, and the like. The specific surface area of these carbon materials may be improved by activation treatments such as steam activation, alkali activation, zinc chloride activation, electric field activation, and the like, as well as by opening treatment.

Examples of the binder include rubbers such as fluororubber, diene rubber, styrene rubber (e.g., styrene-butadiene copolymer), and the like, fluorine-containing polymers such as polytetrafluoroethylene, polyvinylidene fluoride, and the like, celluloses such as carboxymethylcellulose, nitrocellulose and the like, as well as polyolefin resin, polyimide resin, acrylic resin, nitrile resin, polyester resin, phenol resin, polyvinyl acetate resin, poly(vinyl alcohol) resin, epoxy resin, and the like. Only one kind of these binders may be used, or two or more kinds thereof may be used in combination.

As the conductive auxiliary, Ketjen black, acetylene black, natural/artificial graphite, fibrous carbon, and the like can be used. Examples of the fibrous carbon include fibrous carbons such as carbon nanotube, carbon nanofiber, and the like. Carbon nanotube may be a single-walled carbon nanotube (SWCNT), which has a single graphene sheet, or a multi-walled carbon nanotube (MWCNT), which has two or more graphene sheets rolled coaxially to form multi-layer tube walls, or also be a mixture of these.

A carbon coating layer containing a conducting agent such as graphite and the like may be provided between the current collector and the active material layer. A carbon coating layer can be formed by applying a slurry containing a conducting agent such as graphite and the like, a binder, and the like to the surface of a current collector and drying the slurry.

The positive electrode and negative electrode of a lithium ion secondary battery, which is one type of power storage device, are constituted by forming an active material layer on a current collector. As the current collector, metals such as aluminum foil, platinum, gold, nickel, titanium, steel, and the like, carbon, conductive polymer materials such as polyaniline, polypyrrole, polythiophene, polyacetylene, polyparaphenylene, polyphenylene vinylene, polyacrylonitrile, and polyoxadiazole, or a resin made by filling a conductive filler in a non-conductive polymer material can be used. The shape of the current collector may be any, such as film, foil, plate, network, expanded metal, cylinder, and the like.

The active material is mixed with, for example, a binder and applied to a current collector by a doctor blade method or the like. A mixture of carbon material and binder may be formed into a sheet and pressed onto a current collector. Conductive carbon, such as carbon black, acetylene black, Ketjen black, graphite, and the like, may be added to the active material layer as a conductive auxiliary. It is added to and kneaded with the active material and binder, then applied to or pressed onto a current collector.

As the positive electrode active material, metal compound particles capable of absorbing and releasing lithium ions can be used. For example, layered rock salt-type LiMO₂, layered Li₂MnO₃-LiMO₂ solid solution, and spinel-typeLiM₂O₄ (wherein M is Mn, Fe, Co, Ni, or a combination of these) can be mentioned. Specific examples thereof include LiCoO₂, LiNiO₂, LiNi_{4/5}CO_{1/5}O₂, LiNi_{1/3}Co_{1/3}Mn_{1/3}O₂, LiNi_{4/5}Co_{1/10}Mn_{1/10}O₂, LiNi_{1/2}Co_{1/5}Mn_{3/10}O₂, LiNi_{1/2}Mn_{1/2}O₂, LiFeO₂, LiMnO₂, Li₂MnO₃-LiCoO₂, Li₂MnO₃-LiNiO₂, Li₂MnO₃-LiNi_{1/3}CO_{1/3}Mn_{1/3}O₂, Li₂MnO₃-LiNi_{1/2}Mn_{1/2}O₂, Li₂MnO₃-LiNi_{1/2}Mn_{1/2}O₂-LiNi_{1/3}Co_{1/3}Mn_{1/3}O₂, LiMn₂O₄, and LiMn_{3/2}Ni_{1/2}O₄. Examples of the metal compound particles include sulfur and sulfides such as Li₂S, TiS₂, MoS₂, FeS₂, VS₂, Cr_{1/2}V_{1/2}S₂, and the like, selenides such as NbSe₃, VSe₂, NbSe₃, and the like, oxides such as Cr₂O₅, Cr₃O₈, VO₂, V₃O₈, V₂O₅, V₆O₁₃, and the like, and composite oxides such as LiNi_{0.8}Co_{0.15}A_{10.05}O₂, LiVOPO₄, LiV₃O₅, LiV₃O₈, MoV₂O₈, Li₂FeSiO₄, Li₂MnSiO₄, LiFePO₄, LiFe_{1/2}Mn_{1/2}PO₄, LiMnPO₄, Li₃V₂(PO₄)₃, and the like.

As the negative electrode active material, metal compound particles capable of absorbing and releasing lithium ions can be used. For example, oxides such as FeO, Fe₂O₃, Fe₃O₄, MnO, MnO₂, Mn₂O₃, Mn₃O₄, CoO, Co₃O₄, NiO, Ni₂O₃, TiO, TiO₂, TiO₂(B), CuO, NiO, SnO, SnO₂, SiO₂, RuO₂, WO, WO₂, WO₃, MoO₃, ZnO, and the like, metals such as Sn, Si, Al, Zn, and the like, composite oxides such as LiVO₂, Li₃VO₄, Li₄Ti₅O₁₂, Sc₂TiO₅, Fe₂TiO₅, and the like, nitrides such as Li_{2.6}Co_{0.4}N, Ge₃N₄, Zn₃N₂, Cu₃N, and the like, Y₂Ti₂O₅S₂, and MoS₂ can be mentioned.

When a separator is used in a power storage device, examples of the separator include kraft, cellulose of Manila hemp, esparto, hemp, rayon, or the like, and mixed paper thereof, polyester resins such as poly(ethylene terephthalate), poly(butylene terephthalate), poly(ethylene naphthalate), derivative thereof, and the like, polytetrafluoroethylene resin, polyvinylidene fluoride resin, vinylon resin, polyamide resins such as aliphatic polyamide, semi-aromatic polyamide, wholly aromatic polyamide, and the like, polyimide resin, polyethylene resin, polypropylene resin, trimethylpentene resin, polyphenylene sulfide resin, acrylic resin, and the like. Only one kind of these may be used, or two or more kinds thereof may be used in combination.

### [Example]

The present invention is described in more detail in the following with reference to Examples. The present invention is not limited to the following Examples, and can be practiced with appropriate modifications within the scope compatible with the gist described above and below. All of such modifications are encompassed in the technical scope of the present invention.

### (Example 1) Production of modifying material and film

A modifying material for solid electrolytes of Example 1 was produced using an ionic compound, a borate having a polymerizable functional group, and a lithium salt, and the modifying material was formed into a film under conditions for coating solid electrolytes.

For the solid electrolyte of Example 1, bis(fluorosulfonyl)imide anion (i.e., an anion in which n and m in the above-mentioned formula (A) are both 0, hereinafter referred to as the "FSI anion") was used as the anion constituting the ionic compound.

As the cation constituting the ionic compound, N,N-ethylpyrrolidinium cation (i.e., a cation in which R¹ and R² in the above-mentioned formula (I) are both ethyl groups, hereinafter referred to as the "P22 cation") was used.

As the borate having a polymerizable functional group, tris(diethylene glycol monomethacrylate)borate (a compound in which Y¹ to Y³ in the above-mentioned formula (1) are both methacryloyl groups, A¹O to A³O are oxyethylene groups, and p1 to p3 are 2 on average, hereinafter referred to as the "PE-90 Borate") was used.

As the lithium salt, lithium bis(fluorosulfonyl)imide (hereinafter referred to as "LiFSI") manufactured by Tokyo Chemical Industry Co., Ltd. was used.

Specifically, an ionic compound composed of FSI anion and P22 cation (hereinafter referred to as "[P22][FSI]") was added to a vial. In this Example, [P22][FSI] synthesized by ion exchange was used.

To adjust the viscosity of the modifying material, about 3% by mass of acrylonitrile (manufactured by Fujifilm Wako Pure Chemical Industries, Ltd.) was added with respect to the total of the ionic compound, borate having a polymerizable functional group, and lithium salt.

A benzoyl peroxide polymerization initiator ("NYPER BMT-K40" manufactured by NOF CORPORATION) was added to a vial at 0.0003 mol% with respect to the borate having a polymerizable functional group to prepare the modifying material.

The content of each component in the modifying material of Example 1 (basis: total of ionic compound, borate having a polymerizable functional group, and lithium salt) is as follows.
ionic compound: 70% by mass
borate having a polymerizable functional group: 12% by mass
lithium salt: 18% by mass

The obtained modifying material was added dropwise onto a SUN316 plate for measuring ionic conductance and polymerized for 1 hr at 80°C, the same conditions as for coating the solid electrolyte, to obtain the film of Example 1 (thickness 0.5 mm).

### (Comparative Examples 1 and 2) Production of modifying material and film

The modifying materials and films of Comparative Examples 1 and 2 serving as the comparative controls for the film of Example 1 were also produced.

The modifying material of Comparative Example 1 is common with the modifying material of Example 1 in that it contains the ionic compound and the lithium salt, but different in that it does not contain the borate having a polymerizable functional group or a polymerization initiator.

The content of each component in the modifying material of Comparative Example 1 (basis: total of ionic compound and lithium salt) is as follows.
ionic compound: 85% by mass
lithium salt: 15% by mass

The modifying material of Comparative Example 2 is common with the modifying material of Example 1 in that it contains the borate having a polymerizable functional group and the lithium salt, but different in that it does not contain the ionic compound.

The content of each component in the modifying material of Comparative Example 2 (basis: total of borate having a polymerizable functional group and lithium salt) is as follows. borate having a polymerizable functional group: 75% by mass lithium salt: 25% by mass

A film (thickness: 0.5 mm) of Comparative Example 1 or 2 was produced in the same manner as in Example 1 from the modifying material of Comparative Example 1 or 2.

### (Experimental Example 1) Evaluation of film property

The ionic conductance of the films obtained in Example 1, Comparative Example 1, and Comparative Example 2 was measured. Specifically, a two-electrode sealed cell (manufactured by TOYO SYSTEM CO., LTD.) was assembled by sandwiching the obtained film between two SUS316 plates such that they face each other using electrode clamps, and impedance was measured. To confirm whether the film could follow the expansion and contraction of the solid electrolyte, pressure was applied to the SUS316 plates from above and below, and the ionic conductance of the film was also confirmed both during pressurization and after release of the pressure. The ionic conductance was calculated from the impedance measurement results and film thickness. The measurement results are shown in Table 1. The "1.01E-03" and the like indicated in Table 1 mean "1.01×10⁻³" and the like.

The decrease in the thickness of the obtained film due to pressurization and recovery thereof after release of the pressure were also measured. The measurement results are shown in Table 1. The ambient temperature during each measurement is also shown in Table 1.

**[Table 1]**

| | component | | | ionic conductance (S/cm) | | | decrease and recovery of thickness | | ambient temperature (°C) |
|---|---|---|---|---|---|---|---|---|---|
| | borate having polymerizable functional group | lithium salt | ionic compound | no pressurization | during pressurization (11kgf/cm²) | after release of pressurization | decrease due to pressurization (11 kgf/cm²) | recovery after release of pressurization | |
| Example 1 | PE-90 Borate | LiFSI | [P22] [FSI] | 1.01E-03 | 1. 01E-03 | 1.02E-03 | yes (20% decrease) | yes (6% recovery) | 19.5 |
| Comparative Example 1 | none | LiFSI | [P22] [FSI] | 4.50E-05 | 2.90E-05 | 2.80E-05 | yes (46% decrease) | none | 25.3 |
| Comparative Example 2 | PE-90 Borate | LiFSI | none | 1.93E-06 | 4.67E-06 | 1.88E-06 | yes (10.4% decrease) | none | 26.3 |

As shown in Table 1, the film obtained in Example 1, in which an ionic compound, a borate having a polymerizable functional group, and a lithium salt were used, exhibited ionic conductance 22 to 36 times higher than that of the film obtained in Comparative Example 1, in which a borate having a polymerizable functional group was not used. In addition, the film of Example 1 exhibited less thickness loss caused by pressurization and was also superior in thickness recovery after release of pressure, compared to the film of Comparative Example 1.

Furthermore, the film obtained in Example 1 exhibited ionic conductance 216 to 543 times higher than that of the film obtained in Comparative Example 2, in which an ionic compound was not used. Furthermore, the film of Example 1 recovered the thickness after release of the pressure, and high followability to shape changes could be confirmed.

From the above results, it was confirmed that a film formed from a modifying material for solid electrolytes that contains an ionic compound, a borate having a polymerizable functional group, and a lithium salt can deal with changes such as volume expansion and contraction of solid electrolytes, and exhibits high ionic conductance.

### (Experimental Example 2) Decrease in interfacial resistance between positive electrode and solid electrolyte by film formed from modifying material of Example 1

Using the modifying material of Example 1, it was confirmed that the interfacial resistance between the positive electrode and the solid electrolyte was reduced by forming a film between the positive electrode and the oxide solid electrolyte or between the positive electrode and the sulfide solid electrolyte.

As a positive electrode active material, LiNi_{0.8}Co_{0.1}Mn_{0.1}O₂ (abbreviation showing composition of positive electrode active material: NMC811) (manufactured by FUJIFILM Wako Pure Chemical Corporation) was used.

As an oxide solid electrolyte, Li_{1.4}Al_{0.4}Ti_{1.6}(PO₄)₃ (abbreviation: LATP) (manufactured by SUMITA OPTICAL GLASS, Inc.) was used.

As a sulfide solid electrolyte, Li₆PS₅Br (manufactured by FUJIFILM Wako Pure Chemical Corporation) was used.

A cell (symmetrical cell) was produced using an oxide solid electrolyte or a sulfide solid electrolyte as an intermediate layer, with positive electrodes positioned on both sides. The modifying material of Example 1 was polymerized between the solid electrolyte and the positive electrode at 80°C for 1 hr to form a film. The interface resistance between the positive electrode and the solid electrolyte was then measured by AC impedance measurement with pressurization or without pressing. The measurement results are shown in Table 2.

**[Table 2]**

| | film of Example 1 | interface resistance (Ωcm²) |
|---|---|---|
| | | pressurization or no pressing |
| positive electrode-sulfide solid electrolyte | present | 470 |
| | absent | no current |
| positive electrode-oxide solid electrolyte | present | 397 |
| | absent | no current |

As shown in Table 2, by forming the film of Example 1 between the positive electrode and the sulfide solid electrolyte, the interface resistance between the positive electrode and the sulfide solid electrolyte was significantly reduced with pressurization or without pressing. It was also confirmed that the interface resistance between the positive electrode and the oxide solid electrolyte was drastically reduced by forming the film of Example 1 between them.

### (Experimental Example 3) Production and evaluation of solid electrolyte composite film

An oxide solid electrolyte fine powder was mixed with the modifying material of Example 1, and the obtained mixture was heated on a PET film at 80°C for 1 hr to produce an oxide solid electrolyte composite film. Furthermore, without using the modifying material of Example 1, a slurry of the oxide solid electrolyte fine powder was used to form the solid electrolyte fine powder into a film. As the oxide solid electrolyte, Li_{1.4}Al_{0.4}Ti_{1.6}(PO₄)₃ (abbreviation: LATP) (manufactured by SUMITA OPTICAL GLASS, Inc.) was used.

The produced composite film or the oxide solid electrolyte formed into a film was compressed at 500 MPa, and then the thickness and ion were measured. Ionic conductance was measured by AC impedance measurement. The amount of the modifying material of Example 1 added with respect to the entire composite film, and the thickness and ionic conductance after compression at 500 MPa of the composite film or the oxide solid electrolyte formed into a film are shown in Table 3. In Table 3, "2.00E-07" and the like mean "2.00×10⁻⁷" and the like.

**[Table 3]**

| modifying material of Example 1 (% by mass) | thickness after 500 MPa compression (mm) | ionic conductance (S/cm) |
|---|---|---|
| 0 | 0.92 | 2.00E-07 |
| 5 | 0.96 | 1.00E-05 |
| 10 | 0.91 | 4.00E-05 |
| 20 | 0.87 | 1.70E-04 |

Oxide solid electrolytes have high interparticle resistance, due to which the value was close to insulation when only the oxide solid electrolyte (i.e., the modifying material of Example 1 was 0% by mass) was used even when pressure was applied. By forming a composite film using the modifying material of Example 1 and the oxide solid electrolyte (i.e., by coating the oxide solid electrolyte with a film formed from the modifying material of Example 1), it became possible to bond the interparticle interfaces, and ionic conductance could be confirmed without sintering the oxide solid electrolyte.

### (Comparative Example 3) Production of all-solid-state secondary battery

### <Production of slurry for positive electrode>

LiNi_{1/2}Co_{1/5}Mn_{3/10}O₂ (abbreviation showing composition of positive electrode active material: NMC523) (average particle size: 10 µm, manufactured by Toshima Manufacturing Co., Ltd.) (70 parts by mass) as a positive electrode active material, sulfide glass composed of Li₂S and P₂S₅ (Li₂S/P₂S₅=75 mol%/25 mol%, average particle size 5 µm (manufactured by FUJIFILM Wako Pure Chemical Corporation) (28 parts by mass) as a solid electrolyte, acetylene black (0.8 parts by mass) as a conductive auxiliary, and polyvinylidene fluoride (manufactured by FUJIFILM Wako Pure Chemical Corporation) (1.2 parts by mass) as a binder were mixed, xylene was further added as a liquid medium to adjust the solid content concentration to 75% by mass, and they were mixed in THINKY MIXER (manufactured by THINKY, AWATORI RENTARO ARV-310) for 30 min to produce a slurry for positive electrode.

### <Production of slurry for solid electrolyte layer>

Sulfide glass composed of Li₂S and P₂S₅ (Li₂S/P₂S₅=75 mol%/25 mol%, average particle size 5 µm) (98 parts by mass) as a solid electrolyte and polyvinylidene fluoride (manufactured by FUJIFILM Wako Pure Chemical Corporation) (2 parts by mass) as a binder were mixed, xylene was further added as a liquid medium to adjust the solid content concentration to 55% by mass, and they were mixed in THINKY MIXER (manufactured by THINKY, AWATORI RENTARO ARV-310) for 30 min to produce a slurry for solid electrolyte layer.

### <Production of slurry for negative electrode>

Artificial graphite (average particle size: 20 µm, manufactured by FUJIFILM Wako Pure Chemical Corporation) (65 parts by mass) as a negative electrode active material, sulfide glass composed of Li₂S and P₂S₅ (Li₂S/P₂S₅=75 mol%/25 mol%, average particle size 5 µm (manufactured by FUJIFILM Wako Pure Chemical Corporation) (33 parts by mass) as a solid electrolyte, and styrene-butadiene copolymer (manufactured by FUJIFILM Wako Pure Chemical Corporation) (2 parts by mass) as a binder were mixed, xylene was further added as a liquid medium to adjust the solid content concentration to 65% by mass, and they were mixed in THINKY MIXER (manufactured by THINKY, AWATORI RENTARO ARV-310) for 10 min to produce a slurry for negative electrode.

### <Production of positive electrode>

The slurry for positive electrode produced above was applied to aluminum foil by a doctor blade method and dried under the conditions of 120°C and reduced pressure for 3 hr to remove the xylene, whereby a positive electrode with a 0.1 mm-thick positive electrode active material layer was produced.

### <Production of solid electrolyte layer>

The slurry for solid electrolyte layer produced above was applied to release PET film by a doctor blade method and dried under the conditions of 120°C and reduced pressure for 3 hr to remove the xylene, whereby a 0.1 mm-thick solid electrolyte layer was produced.

### <Production of negative electrode>

The slurry for negative electrode produced above was applied to stainless steel foil by a doctor blade method and dried under the conditions of 120°C and reduced pressure for 3 hr to remove the xylene, whereby a negative electrode with a 0.1 mm-thick negative electrode active material layer was produced.

### <Production of all-solid-state secondary battery>

The positive electrode produced above was cut into a 13 mm diameter disk. The negative electrode and the solid electrolyte layer peeled from the release PET film were then cut into a 15 mm diameter disk. Then, the cut positive electrode was attached to one side of the cut solid electrolyte layer such that the positive electrode active material layer of the positive electrode was in contact with the solid electrolyte layer. The cut negative electrode was attached to the other side of the cut solid electrolyte layer such that the negative electrode active material layer of the negative electrode was in contact with the solid electrolyte layer. They were pressurized (500 MPa, 2 min) with heating (90°C) by a heat press machine to produce a laminate for all-solid-state secondary battery having a laminate structure of aluminum foil/positive electrode active material layer/solid electrolyte layer/negative electrode active material layer/stainless steel foil. The thus-produced laminate for all-solid-state secondary battery was then placed in a stainless steel 2032-type coin case incorporating a spacer and a washer, and the 2032-type coin case was crimped to produce an all-solid-state secondary battery.

### (Example 2) Production of all-solid-state secondary battery (positive electrode interface treatment)

The positive electrode produced in Comparative Example 3 was cut into a 14 mm x 20 mm shape. The negative electrode and solid electrolyte layer were also cut into a 19 mm x 24 mm shape. The solid electrolyte layer, negative electrode active material layer, and stainless steel foil were laminated in this order, and pressurized (490 MPa, 2 min) with heating (90°C) by a heat press machine to produce a laminate structure of solid electrolyte layer/negative electrode active material layer/stainless steel foil. Then, the modifying material of Example 1 was applied to the surface of the positive electrode active material layer of the positive electrode. The electrode was attached such that it was in contact with the solid electrolyte layer of the laminate structure of solid electrolyte layer/negative electrode active material layer/stainless steel foil, and pressurized (3 MPa, 1 min) with heating (80°C) by a heat press machine to produce a laminate for all-solid-state secondary battery, having a laminate structure of aluminum foil/positive electrode active material layer/film formed from modifying material/solid electrolyte layer/negative electrode active material layer/stainless steel foil. The thus-produced laminate for all-solid-state secondary battery was then placed in an aluminum pouch and compressed to produce an all-solid-state secondary battery (positive electrode interface treatment).

### (Example 3) Production of all-solid-state secondary battery (both interface treatment)

The positive electrode, negative electrode, and solid electrolyte layer produced in Comparative Example 3 were separately cut into 14 mm x 20 mm shapes. The modifying material of Example 1 was applied to the surface of the positive electrode active material layer of the positive electrode and the surface of the negative electrode active material layer of the negative electrode, and they were attached to be in contact with the solid electrolyte layer and pressurized (3 MPa, 1 min) with heating (80°C) by a heat press machine to produce a laminate for all-solid-state secondary battery, having a laminate structure of aluminum foil/positive electrode active material layer/film formed from modifying material/solid electrolyte layer/film formed from modifying material/negative electrode active material layer/stainless steel foil. The thus-produced laminate for all-solid-state secondary battery was then placed in an aluminum pouch and compressed to produce an all-solid-state secondary battery (both interface treatment).

### (Experimental Example 4) Measurement of direct current internal resistance (DCR) of all-solid-state secondary battery

Using the all-solid-state secondary battery of Comparative Example 3 and the all-solid-state secondary battery of Example 2 (positive electrode interface treatment), a direct current internal resistance (DCR) test was conducted in an environment of 25°C. The charging was performed by increasing the voltage to a final voltage of 3.7 V over 120 min, followed by a 10-min pause, and then decreasing the discharge to a final voltage of 1.9 V over 120 min, followed by a 10-min pause. This cycle was repeated, and the direct current internal resistance (DCR) was measured from the voltage change by using Ohm's law. The results are shown in Table 4. In Table 4 below, "DCR (10 min)" means a direct current internal resistance value calculated by pausing charging at a state of charge (SOC) of 90%, and then dividing the difference between the voltage 10 min after the pause and the voltage before the pause by the current value at a constant current, "DCR (1 sec)" means a direct current internal resistance value calculated by pausing charging at a state of charge (SOC) of 90%, and then dividing the difference between the voltage 1 second after the pause and the voltage before the pause by the current value at a constant current, and "DCR (1 sec-10 min)" means the difference between DCR (10 min) and DCR (1 sec).

**[Table 4]**

| | DCR (10 min) (Ω) | DCR (1 sec) (Ω) | DCR (1 sec - 10 min) (Ω) |
|---|---|---|---|
| Comparative Example 3 | 223 | 135 | 88 |
| Example 2 (positive electrode interface treatment) | 394 | 325 | 69 |

### (Experimental Example 5) Evaluation of initial charge/discharge property of solid secondary battery

Using the all-solid-state secondary battery of Comparative Example 3, the all-solid-state secondary battery of Example 2 (positive electrode interface treatment), and the all-solid-state secondary battery of Example 3 (both electrode interface treatment), an initial charge/discharge test (3 cycles) was conducted in an environment of 25°C. The charging was performed by increasing the voltage to a final voltage of 3.7 V over 120 min, followed by a 10-min pause, and then decreasing the discharge to a final voltage of 1.9 V over 120 min, followed by a 10-min pause. This cycle was repeated 3 cycles in total, the charge capacity and discharge capacity of each cycle were measured, and the Ah efficiency (=100×discharge capacity/charge capacity) was calculated. The results are shown in Table 5 to Table 7.

**[Table 5]**

| Comparative Example 3 | charge capacity (mAh/g) | discharge capacity (mAh/g) | Ah efficiency |
|---|---|---|---|
| 1st cycle | 183.2 | 130.4 | 71.2% |
| 2nd cycle | 130.2 | 131.6 | 101.1% |
| 3rd cycle | 131.0 | 126.0 | 96.2% |

**[Table 6]**

| Example 2 (positive electrode interface treatment) | charge capacity (mAh/g) | discharge capacity (mAh/g) | Ah efficiency |
|---|---|---|---|
| 1st cycle | 184.6 | 154.1 | 83.5% |
| 2nd cycle | 152.5 | 151.8 | 99.5% |
| 3rd cycle | 151.3 | 151.9 | 100.4% |

**[Table 7]**

| Example 3 (both interface treatment) | charge capacity (mAh/g) | discharge capacity (mAh/g) | Ah efficiency |
|---|---|---|---|
| 1st cycle | 198.9 | 145.9 | 73.4% |
| 2nd cycle | 155.6 | 136.3 | 87.6% |
| 3rd cycle | 135.2 | 121.8 | 90.1% |

### <Evaluation results>

The results shown in Table 4, Table 6, and Table 7 confirmed that the all-solid-state secondary battery of Example 2 (positive electrode interface treatment) and the all-solid-state secondary battery of Example 3 (both interface treatment) had the same level of property as the all-solid-state battery of Comparative Example 3. In particular, in Example 3, an all-solid-state secondary battery with the same level of property as the all-solid-state secondary battery of Comparative Example 3, which was produced through a step of applying a high pressure (500 MPa, 2 min), could be easily produced without the step of applying a high pressure.

### [Industrial Applicability]

The modifying material for solid electrolytes of the present invention can form a film that contacts a solid electrolyte, is superior in followability to volume changes of the solid electrolyte, and exhibits high ionic conductance. A solid electrolyte provided with such film is useful for power storage devices such as secondary battery, electric double layer capacitor, and the like.

This application is based on a patent application No. 2023-139368 filed in Japan, the contents of which are encompassed in full herein.

## Claims

1. A modifying material for solid electrolytes, comprising
an ionic compound comprising an anion containing a fluorine atom or a cyano group and a pyrrolidinium cation,
a borate having a polymerizable functional group, and
a lithium salt.

2. The modifying material according to claim 1, wherein a content of the ionic compound is 10 to 90% by mass, a content of the borate having a polymerizable functional group is 1 to 20% by mass, and a content of the lithium salt is 5 to 70% by mass, with respect to the total of the ionic compound, the borate having a polymerizable functional group, and the lithium salt.

3. The modifying material according to claim 1, wherein the borate having a polymerizable functional group is a borate represented by the formula (1): 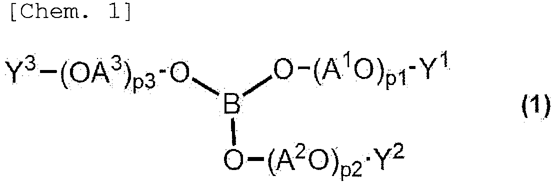 in the formula (1), Y¹ to Y³ are each independently an acryloyl group, a methacryloyl group, or an alkyl group having 1 to 4 carbon atoms, and at least one of these is an acryloyl group or a methacryloyl group,
A¹O to A³O are each independently an oxyalkylene group having 2 to 4 carbon atoms, and
p1 to p3 are each independently a numeral of 1 to 600.

4. The modifying material according to claim 1, wherein the pyrrolidinium cation is a cation represented by the formula (2): 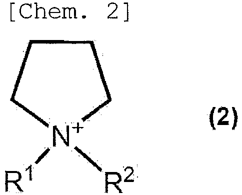 in the formula (2), R¹ and R² are each independently a methyl group, an ethyl group, a propyl group, an isopropyl group, a methoxymethyl group, or a methoxyethyl group.

5. The modifying material according to claim 4, wherein the anion containing a fluorine atom or a cyano group is an anion containing a fluorine atom and selected from the group consisting of
an imide anion in which two hydrogen atoms of NH₂⁻ anion are each independently substituted by a perfluoroalkylsulfonyl group or a fluorosulfonyl group (when two hydrogen atoms of the NH₂⁻ anion are each independently substituted by the perfluoroalkylsulfonyl group, the two perfluoroalkyl groups contained therein are optionally connected),
a tris(trifluoromethanesulfonyl)methanide anion,
a hexafluorophosphate anion,
a (perfluoroalkyl)fluorophosphate anion in which at least one but not all fluorine atoms of a hexafluorophosphate anion are substituted by perfluoroalkyl groups,
a tetrafluoroborate anion,
a (perfluoroalkyl)fluoroborate anion in which at least one but not all fluorine atoms of a tetrafluoroborate anion are substituted by perfluoroalkyl groups, and
an N-(perfluoroalkylsulfonyl)perfluorocarboxylic acid amide anion, or
an anion containing a cyano group and selected from the group consisting of
a tricyanomethanide anion,
a tetracyanoborate anion,
a tricyanomethoxyborate anion,
a tricyanoisopropoxyborate anion,
a tricyano(pentafluorophenoxy)borate anion,
a tricyano(trimethylsiloxy)borate anion,
a tricyano(hexafluoroisopropoxy)borate anion,
a tricyanomethylthioborate anion,
a dicyanodimethoxyborate anion, and
a cyanotrimethoxy borate anion.

6. The modifying material according to claim 5, wherein the imide anion is an anion selected from the group consisting of a bis(perfluoroalkylsulfonyl)imide anion, a bis(fluorosulfonyl)imide anion, and an N-(fluorosulfonyl)-N-(perfluoroalkylsulfonyl)imide anion, each of which is represented by the formula (A): 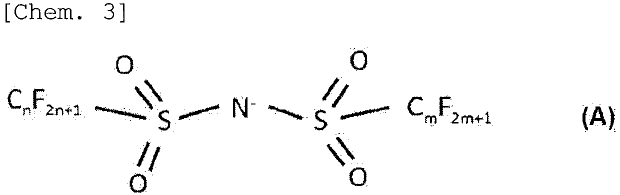 in the formula (A), m and n are each independently an integer of 0 or more,
a cyclohexafluoropropane-1,3-bis(sulfonyl)imide anion represented by the formula (B): 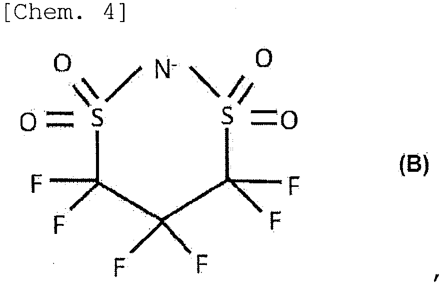 and
a cyclotetrafluoroethane-1,3-bis(sulfonyl)imide anion represented by the formula (C): 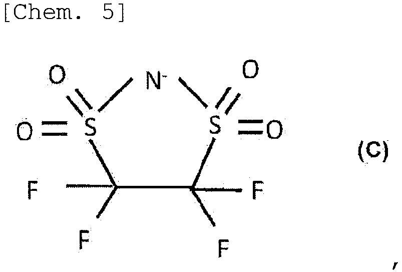
the (perfluoroalkyl)fluorophosphate anion is a tris(fluoroalkyl)trifluorophosphate anion represented by the formula (D): 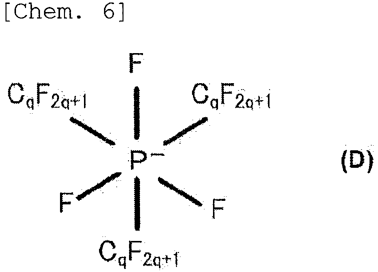 in the formula (D), q is an integer of 1 or more,
the (perfluoroalkyl)fluoroborate anion is an anion selected from the group consisting of a mono(fluoroalkyl)trifluoroborate anion and a bis(fluoroalkyl)fluoroborate anion, each of which is represented by the formula (E): 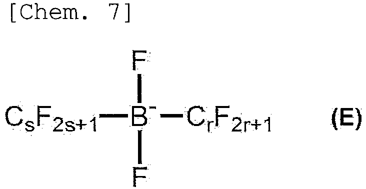 in the formula (E), r is an integer of 1 or more and s an integer of 0 or more, and
the N-(perfluoroalkylsulfonyl)perfluorocarboxylic acid amide anion is an anion represented by the formula (F): 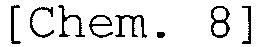 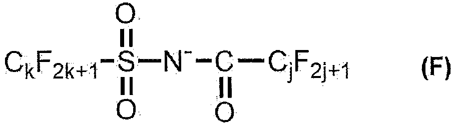 in the formula (F), j and k are each independently an integer of 1 or more.

7. The modifying material according to claim 1, further comprising a polymerization initiator.

8. A power storage device provided with
a film formed from the modifying material according to any one of claims 1 to 7,
a solid electrolyte, and
two electrodes facing each other across the solid electrolyte,
wherein the film is present between the solid electrolyte and at least one of the two electrodes.

9. The power storage device according to claim 8, wherein at least one of the two electrodes is a polarizable electrode comprising an active material layer made of a porous material and a current collector.
